# EUROPEAN PATENT SPECIFICATION

(11) **EP 2 988 039 B1**
(45) Date of publication and mention of the grant of the patent: **02.05.2018**
(21) Application number: 15172800.3
(22) Date of filing: 18.06.2015
(51) Int. Cl.: F16K 11/22, F16K 31/00

(54) **THERMOSTAT FAUCET**
THERMOSTATWASSERHAHN
ROBINET DE THERMOSTAT

(30) Priority: 30.06.2014 CN 201420350960 U
(43) Date of publication of application: 24.02.2016
(73) Proprietor: Xiamen Runner Industrial Corporation, Xiamen 361021 (CN)
(72) Inventor: Wang, Qingping, 361021 Xiamen (CN); Wu, Cankun, 361021 Xiamen (CN)
(74) Representative: Lang, Christian

(56) References cited:
- EP-A2- 2 386 927
- CN-Y- 200 946 691

## Description

### BACKGROUND OF THE INVENTION

### Field of the Invention

The present invention relates to a faucet and, more particularly, to a thermostat faucet.

### Description of the Related Art

A thermostat faucet is also known as shower mixer faucet, which serves to mix the cold water and hot water into warm water at a preset water temperature.

The first-generation mixer faucets pertain to the type of two handle mixer, users need to control both handles for hot water and cold water at same time to mix water mix at a desired temperature.
The second-generation mixer faucets pertain to the type of one handle mixer. The one handle mixer faucet has a ceramic valve core that can adjust the temperature. Users hold the handle to turn right or left to adjust the temperature of the mix water, and to swing the handle up and down to adjust the flow of the mixed water.

However, when the hot or cold water pressure changes abruptly or when the hot water temperature changes suddenly, manual operation is required for readjustment of water temperature for both the first and second generation mixer faucets.

A conventional design for a thermostat faucet is disclosed, for example, in document EP 2 386 927 A2, wherein the thermostat faucet comprises a shell with a hot water inlet and a cold water inlet, a thermostat valve core, a conduit and a switch valve. Another design of a conventional thermostat faucet is described in document CN 200 946 691 Y.

### SUMMARY OF THE INVENTION

In view of the problems and drawbacks of the prior art, the objective of the present invention is to provides a thermostat faucet that ensures faster temperature adjustment of outlet water and reduced water path and faucet size.

To achieve the foregoing objective, the thermostat faucet includes a shell, a thermostat valve core, a water pipe, a switch valve, a flow channel, and a conduit.

The shell has a cold inlet tube and a hot inlet tube mounted therein.

The thermostat valve core is connected with the cold inlet tube and the hot inlet tube of the shell and has a water outlet.

The water pipe has a first end, a second end, a duct, and a baffle. The first end is connected with the water outlet of the thermostat valve core. The second end is opposite to the first end.

The duct is mounted in the water pipe and has an exit end.

The baffle is located at the first end of the water pipe, has multiple openings, and communicates with the duct,

The switch valve is connected with the second end of the water pipe, communicates with the water outlet of the switch valve, and has a water inlet and a water outlet. The water outlet communicates with the openings of the baffle.

The flow channel is formed through a junction portion between an interior wall of the water pipe and the baffle and communicates with the water inlet of the switch valve.

The conduit is formed through the shell and communicates with the exit end of the duct of the water pipe.

According to the foregoing description, the present invention has the advantages of a simplified faucet structure facilitating assembly of the thermostat faucet, reduced cost, and faster temperature adjustment of outlet water, and shortened length of water path to save more space necessarily occupied by the thermostat faucet.

### BRIEF DESCRIPTION OF THE DRAWINGS

The detailed description of the drawings particularly refers to the accompanying figures in which:
Fig. 1 is a perspective view of a thermostat faucet in accordance with the present invention;
Fig. 2 is a cross-sectional view the thermostat faucet of Fig.1;
Fig. 3 is a top view in partial section of the thermostat faucet of Fig.1;
Fig. 4 is a operational top view in partial section of a thermostat faucet in Fig. 1;
Fig. 5 is a perspective view of one end of a water pipe of the thermostat faucet in Fig. 1;
Fig. 6 is a perspective view of the other end of the water pipe of the thermostat faucet in Fig. 1; and
Fig. 7 is a perspective view of a switch valve of the thermostat faucet in Fig.

### DETAILED DESCRIPTION OF THE INVENTION

The purpose, construction, features, functions and advantages of the present invention can be appreciated and understood more thoroughly through the following detailed description with reference to the attached drawings.

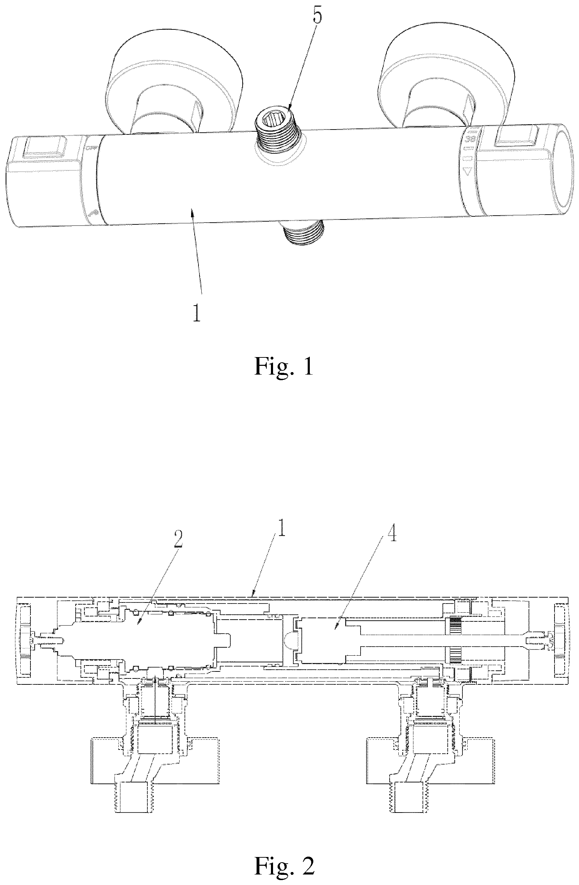

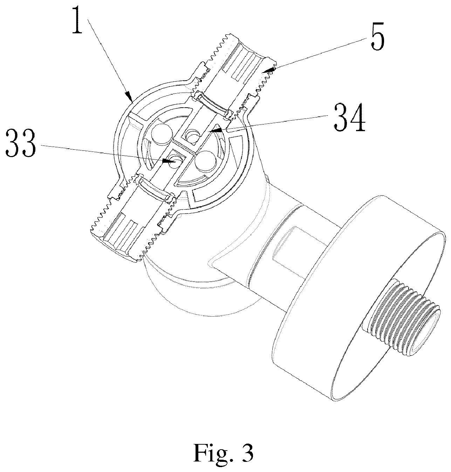

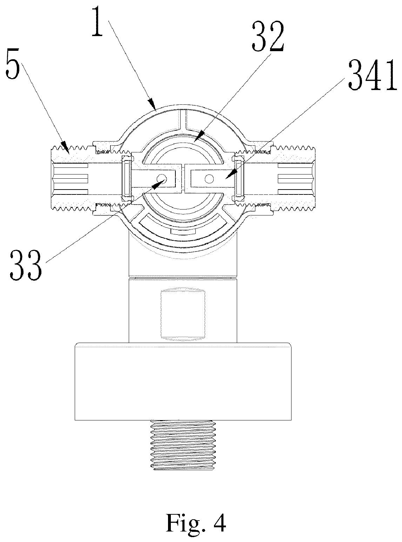

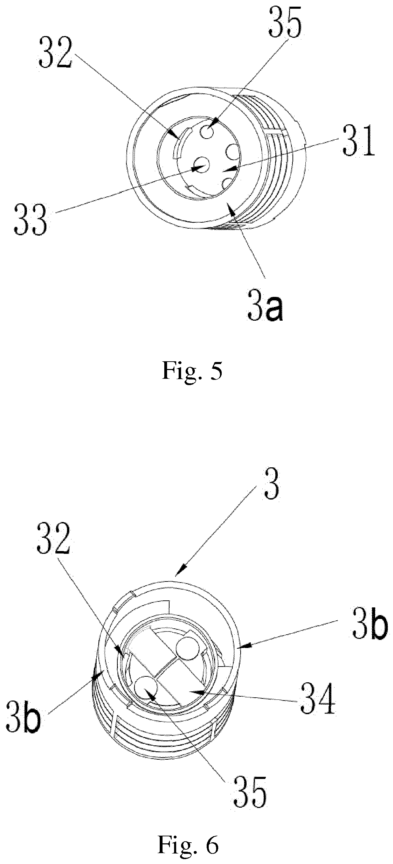

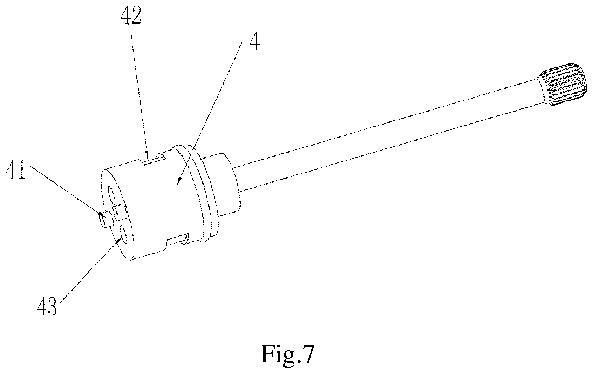

With reference to Figs. 1-7, a thermostat faucet in accordance with the present invention includes a shell 1, a thermostat valve core 2, a water pipe 3, a switch valve 4, and a conduit 5.

The shell 1 has a cold inlet tube and a hot inlet tube mounted therein. The thermostat valve core 2 is connected with the cold inlet tube and the hot inlet tube and has a water outlet. The water pipe 3 has a baffle 31 at a first end 3a of the water pipe 3 and the first end of the water pipe 3 with the baffle 31 is connected with the water outlet of the thermostat valve core. The switch valve 4 is connected with a second end 3b of the water pipe 3 opposite to the second end of the water pipe 3 with the baffle 31 and has a water inlet 42 and the water outlet. A flow channel 32 is formed through a junction portion between an interior wall of the water pipe 3 and the baffle 31. The baffle 31 has multiple openings 33communicating with the water outlet of the switch valve 4. The water pipe 3 further has a duct 34 mounted therein, communicating with the openings 33, and having an exit end 341 communicating with the conduit 5 mounted through the shell 1. The baffle 31 has multiple sunken holes 35 formed through the baffle 31. The switch valve 4 has multiple bumps 41 formed on one end of the switch valve 4 adjacent to the baffle 31 and respectively fitted in the sunken holes 35.

When hot water and cold water flow through the thermostat valve core 2 to the water pipe 3, a handle is used to adjust temperature. After temperature adjustment, water enters the water pipe 3, the switch valve 4 is mounted in the water pipe 3. A switch rod of the switch valve 4 is turned to switch the function and adjust water flow. In the present embodiment, hot and cold water flow to the water pipe through the thermostat valve core 2. Water then passes through the flow channel 32 to the end of the water pipe 3 opposite to the baffle 31. Water then flows through the switch valve 4 to the openings 33. At last, the water exits through the duct 34 and the conduit 5.

In the present invention water flows in a fold-back manner, thereby reducing the length of the water flow pathway shortening the length of the thermostat faucet, and thus saving materials in production.

## Claims

1. A thermostat faucet, comprising:
a shell (1) having a cold inlet tube and a hot inlet tube mounted therein;
a thermostat valve core (2) connected with the cold inlet tube and the hot inlet tube of the shell and having a water outlet;
a conduit (5) formed through the shell (1);
a switch valve (4) having a water inlet (42) and a water outlet (43); **characterized in that**
the thermostat faucet further comprises a water pipe (3) having:
a first end (3a);
a second end (3b) opposite to the first end (3a), wherein the second end (3b) is connected to the switch valve (4);
a duct (34) mounted in the water pipe (3) and having an exit end (341), wherein the exit end (341) of the duct (34) of the water pipe (3) communicates with the conduit (5); and
a baffle (31) located at the first end (3a) of the water pipe (3), wherein the first end (3a) of the water pipe (3) with the baffle (31) is connected with the water outlet of the thermostat valve core (2); wherein the baffle (31) has multiple openings (33) communicating with the water outlet (43) of the switch valve (4) and communicating with the duct (34);
wherein a flow channel (32) formed through a junction portion between an interior wall of the water pipe (3) and the baffle (31), and communicating with the water inlet (42) of the switch valve (4).

2. The thermostat faucet as claimed in claim 1, wherein the baffle (31) has multiple sunken holes (35) formed through the baffle (31), and the switch valve (4) has multiple bumps (41) formed on one end of the switch valve (4) adjacent to the baffle (31) and respectively fitted in the sunken holes (35).

## Patentansprüche

1. Thermostatarmatur, welche Folgendes umfasst:
ein Gehäuse (1) mit einem darin montierten Kalteinlassrohr und Warmeinlassrohr,
einen Thermostatventilkern (2), welcher mit dem Kalteinlassrohr und dem Warmeinlassrohr des Gehäuses verbunden ist und einen Wasserauslass aufweist,
eine Leitung (5), welche durch das Gehäuse (1) gebildet ist,
ein Umschaltventil (4) mit einem Wassereinlass (42) und einem Wasserauslass (43); **dadurch gekennzeichnet, dass**
die Thermostatarmatur ferner ein Wasserleitungsrohr (3) umfasst, welches Folgendes aufweist:
ein erstes Ende (3a),
ein zweites Ende (3b), welches gegenüber dem ersten Ende (3a) liegt, wobei das zweite Ende (3b) mit dem Umschaltventil (4) verbunden ist,
eine Führung (34), welche in dem Wasserleitungsrohr (3) montiert ist und ein Ausgangsende (341) aufweist, wobei das Ausgangsende (341) der Führung (34) des Wasserleitungsrohrs (3) mit der Leitung (5) kommuniziert, und
eine Trennwand (31), welche an dem ersten Ende (3a) des Wasserleitungsrohrs (3) angeordnet ist, wobei das erste Ende (3a) des Wasserleitungsrohrs (3) mit der Trennwand (31) mit dem Wasserauslass des Thermostatventilkerns (2) verbunden ist; wobei die Trennwand (31) mehrere Öffnungen (33) aufweist, die mit dem Wasserauslass (43) des Umschaltventils (4) kommunizieren und mit der Führung (34) kommunizieren,
wobei ein Durchflusskanal (32) durch einen Verbindungsabschnitt zwischen einer Innenwand des Wasserleitungsrohrs (3) und der Trennwand (31) gebildet ist und mit dem Wassereinlass (42) des Umschaltventils (4) kommuniziert.

2. Thermostatarmatur nach Anspruch 1, bei welcher die Trennwand (31) mehrere versenkte Löcher (35) aufweist, die durch die Trennwand (31) gebildet sind, und das Umschaltventil (4) mehrere Erhebungen (41) aufweist, die an einem Ende des Umschaltventils (4) benachbart zu der Trennwand (31) gebildet sind und jeweils in die versenkten Löcher (35) eingepasst sind.

## Revendications

1. Robinet à thermostat, comprenant:
une enveloppe (1) possédant un tube d'entrée froid et un tube d'entrée chaud, montés dans celle-ci;
un noyau de valve à thermostat (2) raccordé au tube d'entrée froid et au tube d'entrée chaud de l'enveloppe et possédant un orifice de sortie d'eau;
un conduit (5) formé à travers l'enveloppe (1);
une valve de permutation (4) possédant un orifice d'entrée d'eau (42) et un orifice de sortie d'eau (43) ; **caractérisé en ce que**
le robinet à thermostat comprend en outre un tuyau d'eau (3) possédant:
une première extrémité (3a);
une seconde extrémité (3b) en face de la première extrémité (3a), dans lequel la seconde extrémité (3b) est raccordée à la valve de permutation (4);
une conduite (34) montée dans le tuyau d'eau (3) et possédant une extrémité de sortie (341), dans lequel l'extrémité de sortie (341) de la conduite (34) du tuyau d'eau (3) communique avec le conduit (5); et
une cloison (31) située à la première extrémité (3a) du tuyau d'eau (3), dans lequel la première extrémité (3a) du tuyau d'eau (3) avec la cloison (31) est raccordée à l'orifice de sortie d'eau du noyau de valve à thermostat (2) ; dans lequel la cloison (31) possède de multiples ouvertures (33) communiquant avec l'orifice de sortie d'eau (43) de la valve de permutation (4) et communiquant avec la conduite (34);
dans lequel un canal d'écoulement (32) est formé à travers une portion de jonction entre une paroi intérieure du tuyau d'eau (3) et la cloison (31), et communique avec l'orifice d'entrée d'eau (42) de la valve de permutation (4).

2. Robinet à thermostat selon la revendication 1, dans lequel la cloison (31) possède de multiples trous creusés (35) formés à travers la cloison (31), et la valve de permutation (4) possède de multiples bosses (41) formées sur une extrémité de la valve de permutation (4) adjacente à la cloison (31) et respectivement ajustées dans les trous creusés (35).
